# EUROPÄISCHE PATENTSCHRIFT

(11) **EP 3 648 942 B1**
(45) Veröffentlichungstag und Bekanntmachung des Hinweises auf die Patenterteilung: **29.12.2021**
(21) Anmeldenummer: 18729373.3
(22) Anmeldetag: 30.05.2018
(51) Int. Cl.: B29C 45/16, B22D 19/00, B29C 45/00, B29C 45/37, B29C 45/14, B22D 23/00, B29L 31/34, B29L 31/30

(54) **VERFAHREN ZUR HERSTELLUNG VON KUNSTSTOFF-METALL-HYBRID-BAUTEILEN SOWIE KUNSTSTOFF-METALL-HYBRID-BAUTEIL**
METHOD FOR PRODUCING PLASTIC/METAL HYBRID COMPONENTS, AND PLASTIC/METAL HYBRID COMPONENT
PROCÉDÉ DE FABRICATION DE PIÈCES HYBRIDES PLASTIQUE-METAL, AINSI QUE PIÈCE HYBRIDE PLASTIQUE-METAL

(30) Priorität: 04.07.2017 DE 102017211296
(43) Veröffentlichungstag der Anmeldung: 13.05.2020
(73) Patentinhaber: LEONI Bordnetz-Systeme GmbH, 97318 Kitzingen (DE)
(72) Erfinder: DEHN, Manfred, 97318 Kitzingen (DE); KREMLING, Andreas, 97241 Bergtheim-Opferbaum (DE)
(74) Vertreter: FDST Patentanwälte
(86) Internationale Anmeldenummer: PCT/EP2018/064271
(87) Internationale Veröffentlichungsnummer: WO 2019/007595

(56) Entgegenhaltungen:
- DE-A1-102014 214 134
- DE-A1-102014 214 134
- DE-A1-102015 004 896
- DE-A1-102015 004 896
- JP-A- S60 139 416
- JP-A- S60 139 416
- US-A1- 2006 231 231
- US-A1- 2006 231 231
- US-B1- 6 435 366
- US-B1- 6 435 366
- "PLATED MOULDED RESIN HELPS TRUCK LIGHTS LIGHT", DESIGN ENGINEERING, MORGAN-GRAMPIAN LTD. LONDON, GB, 1. Juni 1993 (1993-06-01), Seite 13, XP000382400, ISSN: 0308-8448

## Beschreibung

Die Erfindung betrifft ein Verfahren zur Herstellung von Kunststoff-Metall-Hybrid-Bauteilen, insbesondere für den Kraftfahrzeugbereich, wobei eine Kunststoffmasse in eine Werkzeugform gespritzt wird.

Verfahren zur Herstellung von Kunststoff-Metall-Hybrid-Bauteilen sind prinzipiell bekannt und beispielsweise in der JP S60 139416 A, der US 6 435 366 B1, der US 2006/231231 A1, der DE 10 2014 214134 A1 und der DE 10 2015 004896 A1 beschrieben.

Elektronische und elektromechanische Baugruppen, wie zum Beispiel Leistungsverteiler, Sicherungsboxen oder Relaisboxen, unterliegen typischerweise sogenannten EMV- und/oder Leitfähigkeitsanforderungen, weswegen derzeit für entsprechende Baugruppen meist rein metallische Gehäuse verwendet werden. Diese sind jedoch wesentlich schwerer und teurer als Kunststoffgehäuse.

Mit einem Gehäuse aus einem leitfähigen Kunststoff oder mittels Leitlacken oder metallischen Einlegeteilen lassen sich dagegen die entsprechenden EMV- und/oder Leitfähigkeitsanforderungen nur schwer erfüllen.

Ausgehend hiervon liegt der Erfindung die Aufgabe zugrunde, ein vorteilhaft ausgebildetes Kunststoff-Metall-Hybrid-Bauteil sowie ein vorteilhaftes Verfahren zur Herstellung von Kunststoff-Metall-Hybrid-Bauteilen anzugeben.

Diese Aufgabe wird erfindungsgemäß gelöst durch ein Verfahren mit den Merkmalen des Anspruchs 1. Bevorzugte Weiterbildungen sind in den rückbezogenen Ansprüchen enthalten. Die im Hinblick auf das Verfahren angeführten Vorteile und bevorzugten Ausgestaltungen sind sinngemäß auch auf ein Kunststoff-Metall-Hybrid-Bauteil übertragbar und umgekehrt.

Ein entsprechendes Verfahren dient dabei zur Herstellung von Kunststoff-Metall-Hybrid-Bauteilen, welche bevorzugt für den Einsatz im Kraftfahrzeugbereich ausgestaltet sind und für die typischerweise EMV- und/oder Leitfähigkeitsanforderungen vorgegeben sind.

Hierbei kommt eine Werkzeugform mit einem Kern, welcher bevorzugt als feste Komponente der Werkzeugform ausgebildet ist, zum Einsatz und im Rahmen des Verfahrens wird auf den Kern ein Metall oder eine Metalllegierung aufgesprüht oder aufgespritzt, beispielsweise durch ein thermisches Spritzen und insbesondere durch ein Lichtbogendrahtspritzen. Alternativ ist der Kern als separates Einlegeteil ausgebildet, wobei in diesem Fall die Auftragung des Metalls oder der Metalllegierung vorzugsweise außerhalb der Werkzeugform oder außerhalb der Spritzgussmaschine und insbesondere im Zuge eines separaten Prozessschrittes erfolgt. Nachfolgend, insbesondere unmittelbar nachfolgend, also ohne einen Zwischenschritt, wird in die Werkzeugform eine Kunststoffmasse, beispielsweise PA6, PA6 GF10 (Polyamid mit 10% Glasfaser) oder PA6 GF30, gespritzt, sodass das Metall bzw. die Metalllegierung zur Herstellung eines Rohlings mit der Kunststoffmasse hinterspritzt wird und an der Kunststoffmasse oder zumindest am fertigen Kunststoff fixiert wird, beispielsweise durch sogenannte Mikroverklammerungen.

Weiter wird mittels der Werkzeugform zumindest eine Vertiefung in einer Oberfläche des Rohlings erzeugt, in welche im Rahmen einer ersten Weiterverarbeitung ein Metall oder eine Metalllegierung eingebracht wird, die also im Rahmen einer ersten Weiterverarbeitung insbesondere zumindest teilweise mit einem Metall oder einer Metalllegierung aufgefüllt wird und bevorzugt vollständig aufgefüllt wird. Die Einbringung des Metalls oder der Metalllegierung erfolgt hierbei weiter bevorzugt mittels eines Guss- oder Druckgussverfahrens oder mittels eines Sprühprozesses.

Dabei werden durch das Einbringen von Metall oder durch das Einbringen einer Metalllegierung in die zumindest eine Vertiefung gemäß einer bevorzugten Ausführung Leiterbahnstrukturen realisiert. Durch die Aufbringung eines Metalls oder einer Metalllegierung auf den Kern der Werkzeugform werden dagegen bevorzugt flächige Metallisierungen realisiert, die beispielsweise als elektromagnetische Abschirmung nutzbar sind.

Auf diese Weise lässt sich dann beispielsweise ein Gehäuseteil, ein Gehäuse oder eine Sicherungsbox realisieren, das bzw. die durch einen Kunststoffkörper ausgebildet ist, welcher eine flächige Metallisierung auf der Außenseite und/oder auf der Innenseite für eine elektromagnetische Abschirmung aufweist sowie eine Leiterstruktur auf der Außenseite und/oder der Innenseite, beispielsweise als elektrische Anschlussstruktur für ein Anzeigeelement oder zur Ausbildung eines Prüfkontaktes. Das hier vorgestellte Verfahren erlaubt dabei die Herstellung von Kunststoff-Metall-Hybrid-Bauteilen mit einem verhältnismäßig geringen technischen Aufwand, sodass sich dieses Verfahren unter anderem auch für eine Massenfertigung eignet.

Bevorzugt wird hierbei auf den Kern ein Metall oder eine Metalllegierung aufgespritzt, die einen im Vergleich zur Kunststoffmasse höheren Schmelzpunkt aufweist, wie beispielsweise Kupfer, Aluminium oder Zink. Auf diese Weise ist sichergestellt, dass das Metall oder die Metalllegierung beim Hinterspritzen mit der Kunststoffmasse nicht an- oder aufgeschmolzen wird.

Weiter bevorzugt wird in die zumindest eine Vertiefung in der Oberfläche des Rohlings im Rahmen der ersten Weiterverarbeitung ein Metall oder eine Metalllegierung eingebracht, die einen im Vergleich zur Kunststoffmasse niedrigeren Schmelzpunkt aufweist, also beispielsweise eine Zinnlegierung, sodass durch die Einbringung des Metalls oder der Metalllegierung wiederum die Kunststoffmasse nicht angeschmolzen oder aufgeschmolzen wird.

Das heißt, dass sich mithilfe dieses Verfahrens Metallisierungen an einem Kunststoff realisieren lassen, unabhängig davon, welche Metalle oder Metalllegierungen zum Einsatz kommen sollen und insbesondere unabhängig von den Schmelztemperaturen der vorgesehenen Metalle oder Metalllegierungen für die Metallisierungen und der vorgesehenen Kunststoffe.

Zweckdienlich ist hierbei eine Verfahrensvariante, bei der die Werkzeugform eine Basisform aufweist, in welche der Kern einsetzbar ist und eingesetzt wird, nachdem das Metall oder die Metalllegierung auf den Kern aufgespritzt wurde und bevor die Kunststoffmasse in die Werkzeugform gespritzt wird. Das Aufspritzen des Metalls oder der Metalllegierung auf den Kern erfolgt dann bevorzugt außerhalb der Basisform, was das Aufbringen des Metalls oder der Metalllegierung vereinfacht.

Alternativ wird der Kern für das Aufbringen des Metalls oder der Metalllegierung nicht aus der Basisform entnommen und/oder das Aufbringen des Metalls oder der Metalllegierung erfolgt innerhalb der Basisform oder direkt in der Spritzgussmaschine. In diesem Fall ist der Kern dann vorzugsweise quasi fix in der Basisform montier und wird beispielsweise vor Beginn des Herstellungsprozesses in die Basisform eingesetzt und fest mit der Basisform verbunden, vorzugsweise fest mit der Basisform verschraubt. Es erfolgt hier also keine Entnahme des Kerns während des Herstellungsprozesses. In einigen Anwendungsfällen ist der Kern hierbei nicht lösbar mit der Basisform verbunden, also beispielsweise mit dieser verklebt oder verlötet. Davon unabhängig findet der Auftrag des Metalls oder der Metalllegierung hier bevorzugt direkt in der Spritzgussmaschine statt, was den Prozess vereinfacht.

In einigen Fällen wird der Kern dabei vor dem Aufspritzen des Metalls bzw. der Metalllegierung vorbehandelt, beispielsweise um sicherzustellen, dass das Metall oder die Metalllegierung nicht unerwünscht stark am Kern anhaftet und beim Herauslösen des Rohlings aus der Werkzeugform beschädigt wird.

Der Kern besteht dabei weiter bevorzugt aus einem höherwertigeren Material als die Basisform, wobei das höherwertigere Material vorteilhafterweise eine hohe Standzeit, eine hoher Lebensdauer und/oder ein einfaches Herauslösen von Werkstücken aus der Werkzeugform, also ein einfaches Entformen, bedingt.

Wie bereits zuvor erwähnt, wird durch das Aufspritzen eines Metalls oder einer Metalllegierung auf den Kern bevorzugt eine flächige Metallisierung am Rohling realisiert und dementsprechend wird das Metall bzw. die Metalllegierung flächig auf den Kern aufgespritzt und zwar insbesondere derart, dass eine komplette Seite des Kerns mit dem Metall bzw. der Metalllegierung beschichtet wird. Auf diese Weise wird ein Rohling geschaffen, der in einem Bereich eine geschlossene Metallbeschichtung aufweist, der also zumindest in einem Bereich seiner Oberfläche vollständig metallisiert ist und eben keine metallischen Strukturen oder Leiterbahnen aufweist. Eine derartige flächige Metallbeschichtung dient dann typischerweise zur Ausbildung einer Schirmung oder einer elektromagnetischen Abschirmung. Auf diese Weise wird dann also zum Beispiel ein Gehäuseteil, wie ein Gehäusedeckel, ein Gehäuse oder aber beispielsweise eine Sicherungsbox hergestellt, das bzw. die innenseitig großflächig oder vollflächig metallisiert ist und infolgedessen eine elektromagnetische Schirmung aufweist.

Die Einbringung von Metall oder einer Metalllegierung in die zumindest eine Vertiefung des Rohlings dient dagegen wie bereits zuvor erwähnt, bevorzugt zur Realisierung metallischer Strukturen, wie beispielsweise Leiterbahnstrukturen. Davon unabhängig erfolgt die Einbringung des Metalls bzw. der Metalllegierung in die zumindest eine Vertiefung des Rohlings vorteilhafterweise mittels eines Guss- oder Spritzgussverfahrens, wobei zumindest eine Vertiefung je nach Anwendungszweck typischerweise zumindest teilweise und insbesondere vollständig mit dem Metall oder der Metalllegierung aufgefüllt wird. Alternativ erfolgt die Einbringung des Metalls oder der Metalllegierung mittels eines Spritzprozesses, z.B. mittels thermischen Spritzen.

Gemäß einer weiteren vorteilhaften Verfahrensvariante wird durch die Werkzeugform zumindest eine den Kunststoff des Rohlings durchsetzende oder durchdringende Vertiefung ausgebildet oder aber es wird auf andere Weise, beispielsweise durch nachträgliche Bearbeitung, eine entsprechende durchsetzende Vertiefung am Rohling geschaffen. In eine solche durchsetzende oder durchdringende Vertiefung wird dann weiter bevorzugt, insbesondere im Rahmen der ersten Weiterverarbeitung, ein Metall oder eine Metalllegierung beispielsweise durch ein Guss- oder Spritzgussverfahren eingebracht. Dabei wird die durchsetzende Vertiefung je nach Anwendungszweck teilweise oder vollständig mit dem Metall oder der Metalllegierung aufgefüllt oder aber es erfolgt lediglich eine Art Metallisierung der Oberflächen der Vertiefung. Hierdurch werden dann weiter bevorzugt Kontaktierungen oder Durchkontaktierungen realisiert. Allerdings sind die Durchkontaktierungen dann eben nicht an einer Leiterplatine oder Leiterplatte realisiert, sondern beispielsweise an einer Wandung eines Kunststoffgehäuses oder eines anderen Kunststoff-Metall-Hybrid-Bauteils.

In vorteilhafter Weiterbildung ist die entsprechende den Rohling durchsetzende oder durchdringende Vertiefung im Bereich einer flächigen Metallbeschichtung positioniert, die insbesondere durch das Aufspritzen eines Metalls oder einer Metalllegierung auf den Kern hergestellt worden ist. Insbesondere in diesem Fall wird dann weiter bevorzugt in diese Vertiefung derart Metall eingebracht, dass die hierdurch in der Vertiefung ausgebildete metallische Durchsetzung mit der flächigen Metallbeschichtung verbunden ist, insbesondere elektrisch leitend verbunden nach Art einer Durchkontaktierung.

Bildet nun das Kunststoff-Metall-Hybrid-Bauteil beispielsweise einen Teil eines Gehäuses oder ein Gehäuse aus, so ist die durchsetzende oder durchdringende Vertiefung gemäß einer Ausführungsvariante nach Art eines Durchbruches ausgestaltet und in diesem Fall ist dann bevorzugt das Metall oder die Metalllegierung derart in den Durchbruch eingebracht, dass die Wandungen des Durchbruches metallisiert sind. In einen solchen Durchbruch lässt sich dann beispielsweise ein Kabel oder Teile eines Kabels, also zum Beispiel ein abisoliertes Kabelende, einführen oder durch den Durchbruch hindurchführen und die metallisierten Wandungen lassen sich beispielsweise mit einem Schirm eines entsprechenden Kabels elektrisch leitend verbinden. Ist dann noch eine flächige Metallisierung auf der Innenseite des Gehäuses oder des Gehäuseteils und damit eine Gehäuseschirmung realisiert, so lässt sich hierdurch eine elektrische Verbindung zwischen Gehäuseschirmung und Kabelschirm herstellen.

Gemäß einer weiteren vorteilhaften Verfahrensvariante wird insbesondere vor der ersten Weiterverarbeitung ein elektrischer oder elektronischer Baustein in die zumindest eine Vertiefung des Rohlings eingelegt oder aber es wird ein solcher Baustein im Nahbereich der zumindest einen Vertiefung angebracht. Nachfolgend wird die zumindest eine Vertiefung insbesondere zur Ausbildung einer Leiterstruktur zumindest teilweise mit einem Metall oder einer Metalllegierung aufgefüllt oder es wird das entsprechende Metall oder die entsprechende Metalllegierung in die zumindest eine Vertiefung eingebracht und zwar insbesondere derart, dass der elektrische oder elektronische Baustein mit der Leiterstruktur elektrisch leitend verbunden ist.

Jener Baustein ist dabei beispielsweise durch eine Leuchtdiode oder durch einen Sensor ausgebildet und das Kunststoff-Metall-Hybrid-Bauteil ist beispielsweise als Gehäuseteil oder als Gehäuse ausgeführt. Ist dann zudem innenseitig eine flächige Metallisierung als elektromagnetische Schirmung realisiert sowie zumindest eine durchsetzende oder durchdringende Vertiefung, in die ein Metall oder eine Metalllegierung eingebracht ist, durch die die flächige Metallisierung auf der Innenseite mit der Leiterstruktur und somit schließlich mit dem Sensor oder der Leuchtdiode elektrisch leitend verbunden ist, so lässt sich hierdurch beispielsweise ein Gehäuse oder ein Gehäuseteil realisieren mit einem außenseitigen Sensor oder einer außenseitig angebrachten Leuchtdiode, mit dem bzw. mit der der im Gehäuse induzierte Strom oder die induzierte Spannung erfasst werden kann und durch ein geeignetes Signal, beispielsweise ein Aufleuchten der Leuchtdiode, ausgegeben werden kann.

Günstig ist weiter eine Verfahrensvariante, bei der auf den Rohling nach der ersten Weiterverarbeitung eine Isolationsschicht beispielsweise durch Lackieren, durch Tauchen oder durch ein Umspritzen mit einem Kunststoff aufgebracht wird. Jene Aufbringung der Isolationsschicht erfolgt dabei insbesondere derart, dass die zumindest eine zumindest teilweise mit einem Metall aufgefüllte Vertiefung durch die Isolationsschicht überdeckt wird. Auf diese Weise wird dann in diesem Bereich eine Art Sandwichstruktur mit dem Aufbau Kunststoff-Metall-Kunststoff realisiert.

Ausführungsbeispiele der Erfindung werden nachfolgend anhand einer schematischen Zeichnung näher erläutert. Darin zeigen:
- FIG 1: in einer Art Schnittdarstellung eine Werkzeugform mit einem Kern,
- FIG 2: in einer Seitenansicht der Kern,
- FIG 3: in der Seitenansicht der Kern mit einer aufgebrachten Metallbeschichtung,
- FIG 4: in der Schnittdarstellung die Werkzeugform mit dem Kern und der aufgebrachten Metallbeschichtung,
- FIG 5: in einer Art Schnittdarstellung ein mittels der Werkzeugform hergestellter Rohling mit einer Metallbeschichtung und mit drei Vertiefungen,
- FIG 6: in der Schnittdarstellung der Rohling mit der Metallbeschichtung und mit den drei mit Metall aufgefüllten, nutartigen Vertiefungen,
- FIG 7: in der Schnittdarstellung der Rohling mit der Metallbeschichtung, mit den drei mit Metall aufgefüllten, nutartigen Vertiefungen und mit einer umhüllenden Isolationsschicht,
- FIG 8: in der Schnittdarstellung eine alternative Ausführung des Rohlings mit einer Metallbeschichtung, mit zwei mit Metall aufgefüllten, nutartigen Vertiefungen und mit einer mit Metall aufgefüllten durchsetzenden Vertiefung,
- FIG 9: in der Schnittdarstellung eine zweite alternative Ausführung des Rohlings mit einer Metallbeschichtung, mit zwei mit Metall aufgefüllten, nutartigen Vertiefungen und mit einer als Durchbruch ausgebildeten und metallisierten Vertiefung, in der ein abisoliertes Kabelende einliegt sowie
- FIG 10: in der Schnittdarstellung eine dritte alternative Ausführung des Rohlings mit einer Metallbeschichtung, mit einer mit Metall aufgefüllten, nutartigen Vertiefung und mit einer teils nutartigen und teils als Durchbruch ausgebildeten sowie mit Metall aufgefüllten Vertiefung, in der ein Sensor einliegt.

Einander entsprechende Teile sind in allen Figuren jeweils mit den gleichen Bezugszeichen versehen.

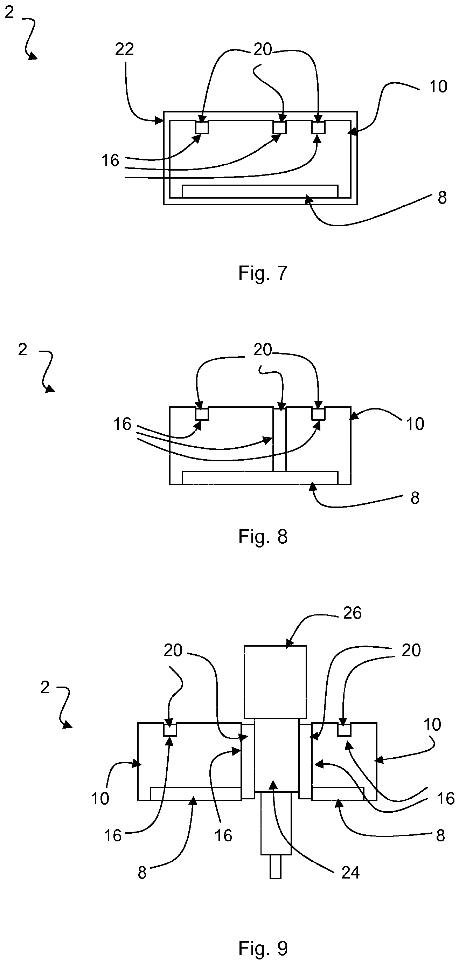

Ein nachfolgend exemplarisch beschriebenes Verfahren dient zur Herstellung eines Kunststoff-Metall-Hybrid-Bauteils 2, wie es beispielsweise in Fig. 7 skizziert ist. Ein entsprechendes Kunststoff-Metall-Hybrid-Bauteil 2, nachfolgend kurz Hybrid-Bauteil 2 genannt, ist dabei bevorzugt für den Einsatz im Kraftfahrzeugbereich ausgelegt und wird dementsprechend bevorzugt in einem Kraftfahrzeug eingesetzt.

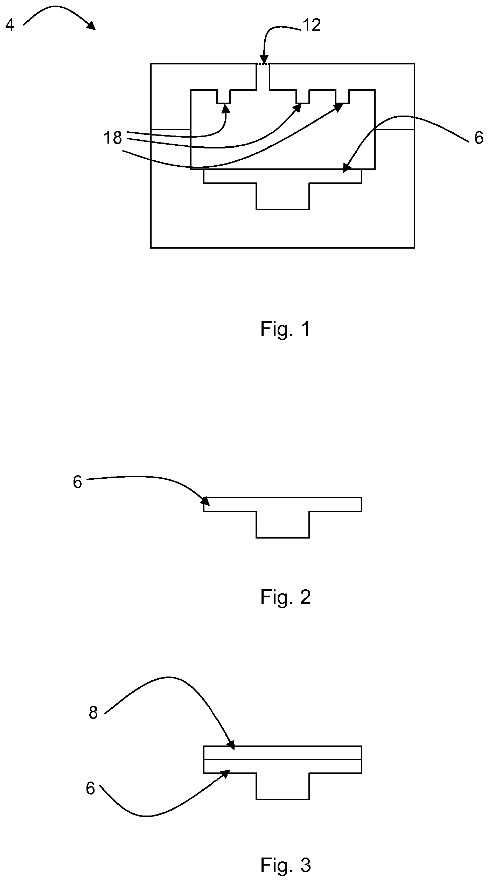

Das Hybrid-Bauteil 2 wird hierbei mithilfe einer in Fig. 1 schematisch wiedergegebenen Werkzeugform 4 hergestellt, die einen in Fig. 2 separat dargestellten Kern 6 umfasst. Jener Kern ist dabei als separates Einlegeteil ausgestaltet und dieser Kern 6 wird in einem ersten Verfahrensschritt außerhalb der übrigen Werkzeugform 4 mit einem Metall 8 oder einer Metalllegierung beschichtet, wobei das entsprechende Metall 8 im Ausführungsbeispiel durch Lichtbogendrahtspritzen aufgebracht wird.

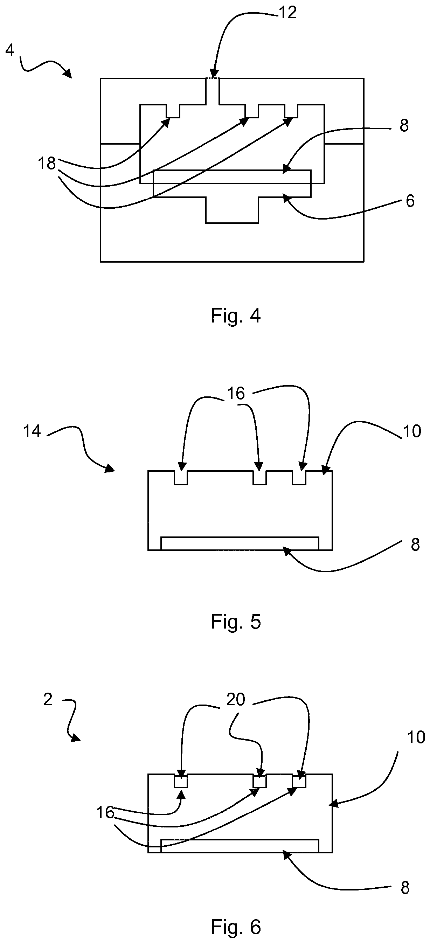

Der mit dem Metall 8 beschichtete Kern 6, der in Fig. 3 dargestellt ist, wird nachfolgend in die übrige Werkzeugform 4 eingesetzt, so wie dies in Fig. 4 zu sehen ist. In einem weiteren Verfahrensschritt wird dann eine Kunststoffmasse 10 über eine dafür vorgesehene Öffnung 12 in der Werkzeugform 4 in die Werkzeugform 4 eingefüllt. Hierbei wird das Metall 8 auf dem Kern 6 mit der Kunststoffmasse 10 hinterspritzt, sodass das Metall 8 nach Aushärten der Kunststoffmasse 10 am Kunststoff fixiert ist, beispielsweise durch Mikroverklammerungen.

Auf diese Weise wird ein in Fig. 5 abgebildeter Rohling 14 erzeugt, bei dem an einer Oberfläche der Kunststoffmasse 10 eine Metallschicht aus dem Metall 8 anhaftet. Das Metall 8 weist dabei bevorzugt einen im Vergleich zur Kunststoffmasse höheren Schmelzpunkt auf und weiter bevorzugt wird als Metall 8 Kupfer, eine Kupferlegierung, Aluminium oder eine Aluminiumlegierung verwendet. Des Weiteren ist die mit dem Metall 8 bedeckte Oberfläche der Kunststoffmasse 10 bevorzugt als ausgedehnte und geschlossene Fläche ausgebildet und dementsprechend ist die Kunststoffmasse 10 großflächig mit dem Metall 8 beschichtet, d.h., dass das Metall 8 an der Oberfläche der Kunststoffmasse 10 bevorzugt keine Strukturen, wie beispielsweise Leiterbahnen, ausbildet, sondern eben eine großflächige Beschichtung.

Dabei bildet das fertige Hybrid-Bauteil 2 beispielsweise ein Gehäuse oder ein Gehäuseteil für elektronische oder elektrische Komponenten aus, also z.B. eine Sicherungsbox, und in diesem Fall bildet das Metall 8 bevorzugt eine elektromagnetische Schirmung aus, die auf der Innenseite des Gehäuses, des Gehäuseteils oder der Sicherungsbox ausgebildet ist. Das Gehäuse, der Gehäuseteil bzw. die Sicherungsbox ist dabei bevorzugt quasi auf der Innenseite mit dem Metall 8 ausgekleidet.

Der auf diese Weise hergestellte Rohling 14 weist weiter im Ausführungsbeispiel drei Vertiefungen 16 in einer Oberfläche auf, die mithilfe der Werkzeugform 4 realisiert werden, die hierfür entsprechende Strukturen 18 oder entsprechende in den Innenraum ragende Vorsprünge aufweist. Diese Vertiefungen 16 werden im Rahmen einer ersten Weiterverarbeitung zumindest teilweise mit einem Metall 20 beispielsweise durch ein Guss- oder ein Druckgussverfahren zumindest teilweise aufgefüllt, wobei das hierfür verwendete Metall 20 typischerweise vom Metall 8 verschieden ist. So weist das Metall 20 in den meisten Fällen einen im Vergleich zur Kunststoffmasse 10 niedrigeren Schmelzpunkt auf. Dies trifft auch auf das hier beschriebene Ausführungsbeispiel zu, bei dem eine Zinnlegierung als Metall 20 zum Einsatz kommt.

Dabei werden durch das zumindest teilweise Auffüllen der Vertiefungen 16 mit dem Metall 20 bevorzugt Strukturen oder Leiterbahnen realisiert und somit typischerweise keine großflächige Metallisierung, wie sie bevorzugt mittels des Metalls 8 realisiert wird. In der Summe sind dann bevorzugt an der Kunststoffmasse 10 zwei Metallisierungen mit zwei unterschiedlichen Metallen oder Metalllegierungen realisiert, wobei eine als flächige Metallbeschichtung ausgebildet ist und eine als Leiterbahnstruktur. Ein solches Hybrid-Bauteil 2 ist in Fig. 6 angedeutet.

In einigen Fällen wird in der Folge eine zweite Weiterverarbeitung vorgenommen, im Rahmen derer beispielsweise eine Isolationsschicht 22 zum Beispiel durch Lackieren oder durch Umspritzen mit einem Kunststoff auf den Rohling 14 aufgebracht wird. Die Aufbringung der Isolationsschicht 22 erfolgt dabei insbesondere derart, dass zumindest die mit dem Metall 20 zumindest teilweise aufgefüllten Vertiefungen 16 und somit auch das Metall 20 mit der Isolationsschicht 22 überdeckt ist. Alternativ oder ergänzend hierzu erfolgt die Aufbringung der Isolationsschicht 22 derart, dass das an der Kunststoffmasse 10 anhaftende Metall 8 mit der Isolationsschicht abgedeckt ist.

Eine weitere Ausführung des Hybrid-Bauteils 2 ist in Fig. 8 wiedergegeben. Hier ist eine der Vertiefungen 16 als eine die Kunststoffmasse 10 durchsetzende Vertiefung 16 ausgebildet, die mit dem Metall 20 zumindest teilweise aufgefüllt ist. Jene Vertiefung 16 ist dabei in dem Bereich positioniert, in dem das Metall 8 an der Kunststoffmasse 10 anhaftet und infolgedessen ist zwischen dem Metall 8 und dem Metall 20 in der durchsetzenden Vertiefung 16 eine elektrisch leitende Verbindung ausgebildet. Somit bildet das Metall 20 in der Vertiefung 16 in diesem Ausführungsbeispiel eine Art Durchkontaktierung aus, jedoch nicht an einer Leiterplatte oder Leiterplatine, sondern beispielsweise in einer Gehäusewand.

Eine leichte Abwandlung dieser Ausführung ist in Fig. 9 skizziert, wobei hier die durchsetzende Vertiefung 16 einen größeren Durchmesser aufweist. Hier füllt das Metall 20 nicht einen Großteil des Volumens der Vertiefung 16 auf, stattdessen ist lediglich die Oberfläche der durchsetzenden Vertiefung 16 oder des Durchbruches mit einer Metallschicht aus dem Metall 20 versehen. Das Hybrid-Bauteil 2 ist dann beispielsweise als Gehäuse für elektrische oder elektronische Komponenten ausgebildet und weist eine durch das Metall 8 ausgebildete und innenseitig im Gehäuse angeordnete Schirmung auf. Diese Schirmung ist durch das Metall 20 in der Vertiefung 16 quasi bis in die Vertiefung 16 hin fortgeführt, wodurch sich diese Schirmung auf einfache Weise elektrisch leitend mit der Schirmung 24 eines Kabels 26 verbinden lässt.

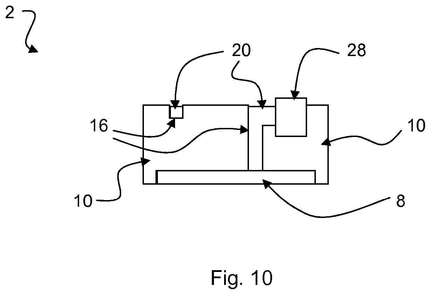

Eine weitere Ausführung des Hybrid-Bauteils 2 ist in Fig. 10 skizziert. Hier wird zunächst ein Sensor 28 mit einem Anzeigeelement in eine der Vertiefungen 16 eingebracht und dort fixiert und nachfolgend wird dann das Metall 20 in diese Vertiefung 16 eingebracht. Das Einbringen des Metalls 20 erfolgt dabei derart, dass einerseits der Sensor 28 elektrisch leitend mit dem Metall 20 verbunden ist und dass das Metall 20 andererseits mit dem Metall 8 elektrisch leitend verbunden ist, sodass über das Metall 20 in der die Kunststoffmasse 10 durchsetzenden Vertiefung 16 eine elektrisch leitende Verbindung zwischen dem Sensor 28 und dem Metall 8 hergestellt ist. Das Hybrid-Bauteil 2 ist dann beispielsweise wiederum als Gehäuse für elektrische oder elektronische Komponenten ausgestaltet und das Metall 8 bildet beispielsweise wiederum eine innenseitige Schirmung am Gehäuse aus. Der Sensor dient dann zum Beispiel dazu, den im Gehäuse induzierten Strom oder die induzierte Spannung zu erfassen und ein korreliertes Signal über das Anzeigeelement des Sensors 8 auszugeben, das beispielsweise als einfache Leuchtdiode ausgebildet ist.

Der Schutzbereich der Erfindung wird durch die Ansprüche definiert und ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Kunststoff-Metall-Hybrid-Bauteil
- 4: Werkzeugform
- 6: Kern
- 8: Metall
- 10: Kunststoffmasse
- 12: Öffnung
- 14: Rohling
- 16: Vertiefung
- 18: Strukturen
- 20: Metall
- 22: Isolationsschicht
- 24: Schirmung
- 26: Kabel
- 28: Sensor mit Anzeige

## Patentansprüche

1. Verfahren zur Herstellung von Kunststoff-Metall-Hybrid-Bauteilen (2), insbesondere für den Kraftfahrzeugbereich, wobei
- eine Kunststoffmasse (10) in eine Werkzeugform (4) gespritzt wird,
- die Werkzeugform (4) einen Kern (6) aufweist, auf den ein Metall (8) aufgespritzt wird und
- nachfolgend die Kunststoffmasse (10) in die Werkzeugform (4) gespritzt wird, so dass das Metall (8) zur Herstellung eines Rohlings (14) mit der Kunststoffmasse (10) hinterspritzt wird und am Kunststoff (10) fixiert wird,
**dadurch gekennzeichnet,**
**dass** mittels der Werkzeugform (4) zumindest eine Vertiefung (16) in einer Oberfläche des Rohlings (14) erzeugt wird, die im Rahmen einer ersten Weiterverarbeitung mit einem Metall (20) zumindest teilweise aufgefüllt wird.

2. Verfahren nach Anspruch 1,
**dadurch gekennzeichnet,**
**dass** auf den Kern (6) ein Metall (8) mit einem im Vergleich zur Kunststoffmasse (10) höherem Schmelzpunkt aufgespritzt wird.

3. Verfahren nach Anspruch 1 oder 2,
**dadurch gekennzeichnet,**
**dass** die zumindest eine Vertiefung (16) in der Oberfläche des Rohlings (14) im Rahmen der ersten Weiterverarbeitung mit einem Metall (20) mit einem im Vergleich zur Kunststoffmasse (10) niedrigerem Schmelzpunkt zumindest teilweise aufgefüllt wird.

4. Verfahren nach einem der Ansprüche 1 bis 3,
**dadurch gekennzeichnet,**
**dass** die Werkzeugform (4) eine Basisform aufweist, in welche der Kern (6) eigesetzt wird, nachdem das Metall (8) auf den Kern (6) aufgespritzt wurde und bevor die Kunststoffmasse (10) in die Werkzeugform (4) gespritzt wird.

5. Verfahren nach einem der Ansprüche 1 bis 4,
**dadurch gekennzeichnet,**
**dass** das Metall (8) auf den Kern (6) flächig aufgespritzt wird, so dass der Rohling (14) in einem Bereich eine Metallbeschichtung (8) aufweist.

6. Verfahren nach einem der Ansprüche 1 bis 5,
**dadurch gekennzeichnet,**
**dass** die zumindest eine Vertiefung (16) des Rohlings (14) mittels eines Guss- oder Spritzgussverfahrens zumindest teilweise und insbesondere vollständig mit einem Metall (20) aufgefüllt wird.

7. Verfahren nach einem der Ansprüche 1 bis 6,
**dadurch gekennzeichnet,**
**dass** die zumindest eine Vertiefung (16) als eine den Kunststoff (10) des Rohlings (14) durchsetzende Vertiefung (16) ausgebildet ist, in die mittels eines Guss- oder Spritzgussverfahrens Metall (20) eingebracht wird.

8. Verfahren nach Anspruch 5 und 7,
**dadurch gekennzeichnet,**
**dass** die zumindest eine den Rohling (14) durchsetzende Vertiefung (16) Im Bereich der Metallbeschichtung (8) positioniert ist und dass in diese Vertiefung (16) derart Metall (20) eingebracht wird, dass die hierdurch in der Vertiefung (16) ausgebildete metallische Durchsetzung (20) mit der Metallbeschichtung (8) verbunden ist.

9. Verfahren nach einem der Ansprüche 1 bis 8,
**dadurch gekennzeichnet,**
**dass** in die zumindest eine Vertiefung (16) des Rohlings (14) zunächst ein elektrischer oder elektronischer Baustein (28) eingelegt wird und dass die zumindest eine Vertiefung (16) des Rohlings (14) nachfolgend zur Ausbildung einer Leiterstruktur (20) derart mit einem Metall (20) zumindest teilweise aufgefüllt wird, dass der elektrische oder elektronische Baustein (28) mit der Leiterstruktur (20) elektrisch leitend verbunden ist.

10. Verfahren nach einem der Ansprüche 1 bis 9,
**dadurch gekennzeichnet,**
**dass** auf den Rohling (14) nach der ersten Weiterverarbeitung eine Isolationsschicht (22) aufgebracht wird, die insbesondere die zumindest eine zumindest teilweise mit einem Metall (20) aufgefüllte Vertiefung (16) zumindest einseitig überdeckt.

## Claims

1. A method for producing plastic-metal-hybrid components (2), in particular for the motor vehicle sector, wherein
- a plastic composition (10) is injected into a tool mould (4),
- the tool mould (4) has a core (6) onto which a metal (8) is sprayed, and
- subsequently, the plastic composition (10) is injected into the tool mould (4) in a manner such that, for producing a blank (14), the metal (8) is back injection moulded with the plastic composition (10) and is fixed on the plastic (10),
**characterised,**
**in that** by means of the tool mould (4) at least one depression (16) is created in a surface of the blank (14), which is, within the scope of a first further processing, at least partially filled with a metal (20).

2. The method according to claim 1,
**characterised,**
**in that** a metal (8) having a higher melting point in comparison to the plastic composition (10) is sprayed onto the core (6).

3. The method according to claim 1 or 2,
**characterised,**
**in that** the at least one depression (16) in the surface of the blank (14) is, within the scope of a first further processing, at least partially filled with a metal (20) having a lower melting point in comparison to the plastic composition (10).

4. The method according to any one of claims 1 to 3,
**characterised,**
**in that** the tool mould (4) has a basic shape into which the core (6) is inserted after the metal (8) has been sprayed onto the core (6) and before the plastic composition (10) is injected into the tool mould (4).

5. The method according to any one of claims 1 to 4,
**characterised,**
**in that** the metal (8) is sprayed onto the core (6) in a planar manner such that the blank (14) has a metal coating (8) in one region.

6. The method according to any one of claims 1 to 5,
**characterised,**
**in that** the at least one depression (16) of the blank (14) is filled at least partially and in particular completely with a metal (20) by means of a casting or injection moulding method.

7. The method according to any one of claims 1 to 6,
**characterised,**
**in that** the at least one depression (16) is formed as a depression (16) penetrating the plastic (10) of the blank (14) into which metal (20) is introduced by means of a casting or injection moulding method.

8. The method according to claims 5 and 7,
**characterised,**
**in that** the at least one depression (16) penetrating the blank (14) is positioned in the region of the metal coating (8) and in that metal (20) is introduced into this depression (16) in a manner such that the metallic penetration (20) formed thereby in the depression (16) is connected to the metal coating (8).

9. The method according to any one of claims 1 to 8,
**characterised,**
**in that**, first, an electrical or electronic module (28) is placed into the at least one depression (16) of the blank (14) and in that, subsequently, to form a conductor structure (20), the at least one depression (16) of the blank (14) is at least partially filled with a metal (20) in a manner such that the electrical or electronic module (28) is connected to the conductor structure (20) in an electrically conductive manner.

10. The method according to any one of claims 1 to 9,
**characterised,**
**in that**, after the first further processing, an insulation layer (22) is applied to the blank (14), which covers, at least on one side, in particular the at least one depression (16) filled at least partially with a metal (20).

## Revendications

1. Procédé pour la fabrication de composants hybrides matière plastique-métal (2), en particulier pour le domaine des véhicules automobiles, dans lequel
- une masse de matière plastique (10) est injectée dans un moule (4),
- le moule (4) présente un cœur (6), sur lequel est appliqué par projection un métal (8), et
- ensuite la masse de matière plastique (10) est injectée dans le moule (4) de sorte que, pour la production d'une ébauche (14), le métal (8) est revêtu par surmoulage avec la masse de matière plastique (10) et fixé à la matière plastique (10),
**caractérisé en ce que**
dans une surface de l'ébauche (14) est engendré au moyen du moule (4) au moins un évidement (16) qui, dans le cadre d'une première transformation ultérieure, est au moins en partie rempli avec un métal (20).

2. Procédé selon la revendication 1,
**caractérisé en ce que**
sur le cœur (6) est appliqué par projection un métal (8) ayant un point de fusion plus élevé en comparaison de la masse de matière plastique (10).

3. Procédé selon la revendication 1 ou 2,
**caractérisé en ce que**
ledit au moins un évidement (16) dans la surface de l'ébauche (14) est au moins en partie rempli, dans le cadre de la première transformation ultérieure, avec un métal (20) ayant un point de fusion plus bas en comparaison de la masse de matière plastique (10).

4. Procédé selon l'une quelconque des revendications 1 à 3,
**caractérisé en ce que**
le moule (4) comporte un moule de base dans lequel le cœur (6) est inséré, après que le métal (8) a été appliqué par projection sur le cœur (6) et avant que la masse de matière plastique (10) soit injectée dans le moule (4).

5. Procédé selon l'une quelconque des revendications 1 à 4,
**caractérisé en ce que**
le métal (8) est appliqué par projection à plat sur le cœur (6), de sorte que l'ébauche (14) comporte dans une zone un revêtement en métal (8).

6. Procédé selon l'une quelconque des revendications 1 à 5,
**caractérisé en ce que**
ledit au moins un évidement (16) de l'ébauche (14) est rempli au moins en partie et en particulier totalement, au moyen d'un procédé de coulée ou moulage par injection, avec un métal (20).

7. Procédé selon l'une quelconque des revendications 1 à 6,
**caractérisé en ce que**
ledit au moins un évidement (16) est configuré sous forme d'un évidement (16) pénétrant dans la matière plastique (10) de l'ébauche (14), dans lequel du métal (20) est introduit au moyen d'un procédé de coulée ou moulage par injection.

8. Procédé selon la revendication 5 et la revendication 7,
**caractérisé en ce que**
ledit au moins un évidement (16) pénétrant dans l'ébauche (14) est positionné dans la zone du revêtement en métal (8) et **en ce que** dans cet évidement (16) est introduit du métal (20) de manière que la voie métallique (20) ainsi réalisée dans l'évidement (16) soit reliée au revêtement en métal (8).

9. Procédé selon l'une quelconque des revendications 1 à 8,
**caractérisé en ce que**
dans ledit au moins un évidement (16) de l'ébauche (14) est d'abord inséré un composant électrique ou électronique (28) et **en ce qu'**ensuite pour la formation d'une structure de conducteur (20) ledit au moins un évidement (16) de l'ébauche (14) est rempli au moins en partie avec un métal (20), de manière que le composant électrique ou électronique (28) soit relié de façon électriquement conductrice à la structure de conducteur (20).

10. Procédé selon l'une quelconque des revendications 1 à 9,
**caractérisé en ce**
**qu'**après la première transformation ultérieure est appliquée sur l'ébauche (14) une couche d'isolation (22) qui en particulier recouvre au moins d'un côté ledit au moins un évidement (16) au moins en partie rempli avec un métal (20).
